# EUROPEAN PATENT APPLICATION

(11) **EP 4 319 014 A1**
(43) Date of publication of application: **07.02.2024**
(21) Application number: 22778544.1
(22) Date of filing: 14.03.2022
(51) Int. Cl.: H04L 5/00

(54) **METHOD AND APPARATUS FOR REDUCING DELAY, TERMINAL, AND DEVICE**

(30) Priority: 01.04.2021 CN 202110358408
(71) Applicant: Datang Mobile Communications Equipment Co., Ltd., Beijing 100085 (CN)
(72) Inventor: MIAO, Jinhua, Beijing 100085 (CN); BERTRAND, Pierre, Henri, Beijing 100085 (CN); CHEN, Li, Beijing 100085 (CN)
(74) Representative: Maiwald GmbH
(86) International application number: PCT/CN2022/080718
(87) International publication number: WO 2022/206360

(57) **Abstract**

Embodiments of the present disclosure provide a method and an apparatus for reducing a latency, a terminal, and a device. The method includes: receiving downlink control information DCI; and activating/deactivating configured grant CG and packet data convergence protocol PDCP duplication transmission based on the DCI. With the above solution, the PDCP duplication transmission can be quickly activated/deactivated and the service transmission latency can be reduced.

## Description

### CROSS-REFERENCE TO RELATED APPLICATION

This disclosure claims a priority to Chinese Patent Application No. 202110358408.6, filed with China National Intellectual Property Administration on April 1, 2021, titled "METHOD AND DEVICE FOR REDUCING LATENCY, TERMINAL AND DEVICE", which is incorporated in its entirety by reference herein.

### TECHNICAL FIELD

The present disclosure relates to the technical field of mobile communications, in particular to a method and an apparatus for reducing a latency, a terminal and a device.

### BACKGROUND

In conventional technologies, a network side may activate/deactivate configured grant by sending downlink control information (DCI), and activate/deactivate duplication transmission through a media access control control element (Media Access Control Control Element, MAC CE).

However, decoding of the MAC CE by a user equipment (User Equipment, UE) results in a certain delay, which may lead to a problem of an increased service transmission latency.

### SUMMARY

Embodiments of the present disclosure provide a method and a device for reducing a latency, a terminal and a device, to address to a certain degree a problem that performing a service transmission through a MAC CE results in an increased service transmission latency in conventional technologies.

In a first aspect, embodiments of the present disclosure provide a method for reducing a latency, applied to a terminal, including:
receiving downlink control information DCI; and
activating/deactivating configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, in a case that the DCI includes the first indication information or the second indication information, the activating/deactivating the configured grant CG and the packet data convergence protocol PDCP duplication transmission based on the DCI includes:
activating or reactivating, based on the DCI, the CG on a carrier corresponding to the carrier ID/carrier group ID indicated by the DCI and performing the PDCP duplication transmission on the carrier corresponding to the carrier ID/carrier group ID.

Optionally, the cell group represents a master cell group MCG or a secondary cell group SCG.

Optionally, in a case that the DCI includes the third indication information, the activating/deactivating the configured grant CG and the packet data convergence protocol PDCP duplication transmission based on the DCI includes:
deactivating, based on the DCI, the CG and the PDCP duplication transmission on a carrier corresponding to the carrier ID/carrier group ID indicated by the DCI; or,
deactivating, based on the DCI, the CG and the PDCP duplication transmission on all carriers.

Optionally, the method further includes:
receiving a first signaling, where the first signaling is used to configure a mapping relationship between the carrier ID indicated by the DCI and a carrier, or the first signaling is used to configure a mapping relationship between the carrier group ID indicated by the DCI and a carrier group.

Optionally, the activating or reactivating the CG on the carrier corresponding to the carrier ID/carrier group ID indicated by the DCI and performing the PDCP duplication transmission on the carrier corresponding to the carrier ID/carrier group ID based on the DCI includes:
receiving a second signaling, where the second signaling is used to configure a data radio bearer for performing activation/deactivation of the PDCP duplication transmission; and
activating or reactivating, based on the DCI and the second signaling, the CG on the carrier corresponding to the carrier ID/carrier group ID indicated by the DCI and performing the PDCP duplication transmission of the data radio bearer on the carrier corresponding to the carrier ID/carrier group ID.

Optionally, the activating or reactivating the CG on the carrier corresponding to the carrier ID/carrier group ID indicated by the DCI and performing the PDCP duplication transmission on the carrier corresponding to the carrier ID/carrier group ID based on the DCI includes:
activating or reactivating, based on a pre-configured data radio bearer corresponding to the configured grant CG and the DCI, the CG on the carrier corresponding to the carrier ID/carrier group ID indicated by the DCI and performing the PDCP duplication transmission of the data radio bearer on the carrier corresponding to the carrier ID/carrier group ID.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

In a second aspect, embodiments of the present disclosure also provide a method for reducing a latency, applied to a network device, including:
sending downlink control information DCI to a terminal based on reporting capability of the terminal, to cause the terminal to activate/deactivate configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, the cell group represents a master cell group MCG or a secondary cell group SCG.

Optionally, the method further includes:
sending a first signaling to the terminal, where the first signaling is used to configure a mapping relationship between the carrier ID indicated by the DCI and a carrier, or the first signaling is used to configure a mapping relationship between the carrier group ID indicated by the DCI and a carrier group.

Optionally, the method further includes:
sending a second signaling to the terminal, where the second signaling is used to configure a data radio bearer for performing activation/deactivation of the PDCP duplication transmission.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

In a third aspect, embodiments of the present disclosure also provide a terminal, including a memory, a transceiver, and a processor;
the memory is configured to store a computer program, the transceiver is configured to transmit and receive data under control of the processor, and the processor is configured to read the computer program in the memory and perform following operations:
receiving downlink control information DCI; and
activating/deactivating configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, in a case that the DCI includes the first indication information or the second indication information, the activating/deactivating the configured grant CG and the packet data convergence protocol PDCP duplication transmission based on the DCI includes:
activating or reactivating, based on the DCI, the CG on a carrier corresponding to the carrier ID/carrier group ID indicated by the DCI and performing the PDCP duplication transmission on the carrier corresponding to the carrier ID/carrier group ID.

Optionally, the cell group represents a master cell group MCG or a secondary cell group SCG.

Optionally, in a case that the DCI includes the third indication information, the activating/deactivating the configured grant CG and the packet data convergence protocol PDCP duplication transmission based on the DCI includes:
deactivating, based on the DCI, the CG and the PDCP duplication transmission on a carrier corresponding to the carrier ID/carrier group ID indicated by the DCI; or,
deactivating, based on the DCI, the CG and the PDCP duplication transmission on all carriers.

Optionally, the processor is further configured to:
receive a first signaling, where the first signaling is used to configure a mapping relationship between the carrier ID indicated by the DCI and a carrier, or the first signaling is used to configure a mapping relationship between the carrier group ID indicated by the DCI and a carrier group.

Optionally, the activating or reactivating the CG on the carrier corresponding to the carrier ID/carrier group ID indicated by the DCI and performing the PDCP duplication transmission on the carrier corresponding to the carrier ID/carrier group ID based on the DCI includes:
receiving a second signaling, where the second signaling is used to configure a data radio bearer for performing activation/deactivation of the PDCP duplication transmission; and
activating or reactivating, based on the DCI and the second signaling, the CG on the carrier corresponding to the carrier ID/carrier group ID indicated by the DCI and performing the PDCP duplication transmission of the data radio bearer on the carrier corresponding to the carrier ID/carrier group ID.

Optionally, the activating or reactivating the CG on the carrier corresponding to the carrier ID/carrier group ID indicated by the DCI and performing the PDCP duplication transmission on the carrier corresponding to the carrier ID/carrier group ID based on the DCI includes:
activating or reactivating, based on a pre-configured data radio bearer corresponding to the configured grant CG and the DCI, the CG on the carrier corresponding to the carrier ID/carrier group ID indicated by the DCI and performing the PDCP duplication transmission of the data radio bearer on the carrier corresponding to the carrier ID/carrier group ID.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

In a fourth aspect, embodiments of the present disclosure further provide a network device, including a memory, a transceiver, and a processor;
the memory is configured to store a computer program, the transceiver is configured to transmit and receive data under control of the processor, and the processor is configured to read the computer program in the memory and perform following operation:
sending downlink control information DCI to a terminal based on reporting capability of the terminal, to cause the terminal to activate/deactivate configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, the cell group represents a master cell group MCG or a secondary cell group SCG.

Optionally, the processor is further configured to:
send a first signaling to the terminal, where the first signaling is used to configure a mapping relationship between the carrier ID indicated by the DCI and a carrier, or the first signaling is used to configure a mapping relationship between the carrier group ID indicated by the DCI and a carrier group.

Optionally, the processor is further configured to:
send a second signaling to the terminal, where the second signaling is used to configure a data radio bearer for performing activation/deactivation of the PDCP duplication transmission.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

In a fifth aspect, embodiments of the present disclosure also provide an apparatus for reducing a latency, applied to a terminal, including::
a first receiving module, configured to receive downlink control information DCI; and
a first processing module, configured to activate/deactivate configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, in a case that the DCI includes the first indication information or the second indication information, the first processing module includes:
a first processing unit, configured to activate or reactivate, based on the DCI, the CG on a carrier corresponding to the carrier ID/carrier group ID indicated by the DCI and perform the PDCP duplication transmission on the carrier corresponding to the carrier ID/carrier group ID.

Optionally, in a case that the DCI includes the third indication information, the first processing module includes:
a second processing unit, configured to deactivate, based on the DCI, the CG and the PDCP duplication transmission on a carrier corresponding to the carrier ID/carrier group ID indicated by the DCI; or,
a third processing unit, configured to deactivate, based on the DCI, the CG and the PDCP duplication transmission on all carriers.

In a sixth aspect, embodiments of the present disclosure also provide an apparatus for reducing a latency, applied to a network device, including:
a first sending module, configured to send downlink control information DCI to a terminal based on reporting capability of the terminal, to cause the terminal to activate/deactivate configured grant CG and packet data convergence protocol PDCP duplication transmission based on the DCI.

In a seventh aspect, embodiments of the present disclosure also provide a processor readable storage medium, where the processor readable storage medium stores a computer program used to cause the processor to execute the method for reducing the latency applied to the terminal or the method for reducing the latency applied to the network device.

In the embodiments of the present disclosure, the terminal activates/deactivates the configured grant CG and the packet data convergence protocol PDCP duplication transmission based on the received downlink control information DCI, which can quickly activate/deactivate the PDCP duplication transmission and reduce the service transmission latency.

The above description is merely an overview of the technical solutions of the present disclosure. To have a clearer understanding of the technical means of the present disclosure so as to perform implementations in accordance with the content of the specification, and to facilitate understanding of the above and other purposes, features, and advantages of the present disclosure, specific implementations of the present disclosure are listed hereinafter.

### BRIEF DESCRIPTION OF THE DRAWINGS

To better clarify technical solutions of embodiments of the present disclosure or in the related technologies, drawings used in descriptions of the embodiments or in the related technologies are briefly introduced hereinafter. Apparently, the described drawings merely illustrate some embodiments of the present disclosure. A person ordinary skilled in the art can obtain other drawings based on these drawings without any creative efforts.
Fig. 1 is a schematic diagram of data duplication in conventional technologies;
Fig. 2 is a schematic diagram of a data transmission process of configured grant type 2 in the conventional technologies;
Fig. 3 is a schematic diagram of data transmission in the conventional technologies;
Fig. 4 is a first flowchart of a method for reducing a latency according to embodiments of the present disclosure;
Fig. 5 is a second flowchart of a method for reducing a latency according to embodiments of the present disclosure;
Fig. 6 is a first structural block diagram of a device for reducing a latency according to embodiments of the present disclosure;
Fig. 7 is a second structural block diagram of a device for reducing a latency according to embodiments of the present disclosure;
Fig. 8 is a structural block diagram of a terminal according to embodiments of the present disclosure;
Fig. 9 is a structural block diagram of a network device according to embodiments of the present disclosure;
Fig. 10 schematically illustrates a block diagram of a computing processing device for executing a method according to the present disclosure; and
Fig. 11 schematically illustrates a storage unit for holding or carrying program code for implementing a method according to the present disclosure.

### DETAILED DESCRIPTION

In order to make purposes, technical solutions, and advantages of embodiments of the present disclosure clearer, the technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

The term "and/or" in the embodiments of the present disclosure describes an association relationship of associated objects, which indicates that there may be three types of relationships. For example, A and/or B may represent three situations: only A being included, both A and B being included, only B being included. The character '/' generally indicates that there is an 'or' relationship between associated objects in front of it and behind it.

The term "multiple" in the embodiments of the present application refers to two or more than two, and other words for expressing quantities are similar to it.

Embodiments of the present application provide a method and a device for reducing a latency, a terminal and a device, which can quickly activate/deactivate PDCP duplication transmission and reduce a service transmission latency.

Methods and devices are based on the same application concept. Since the principles of solving problems in methods and devices are similar, for implementations of the devices and the methods, reference can be made to each other, the repetition of which is not described again herein.

In addition, the technical solutions in the embodiments of this application may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present application may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of this application.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

Before proceeding with explanation of embodiments of the present disclosure, specific explanations of the conventional technologies related to the present solution are provided first.

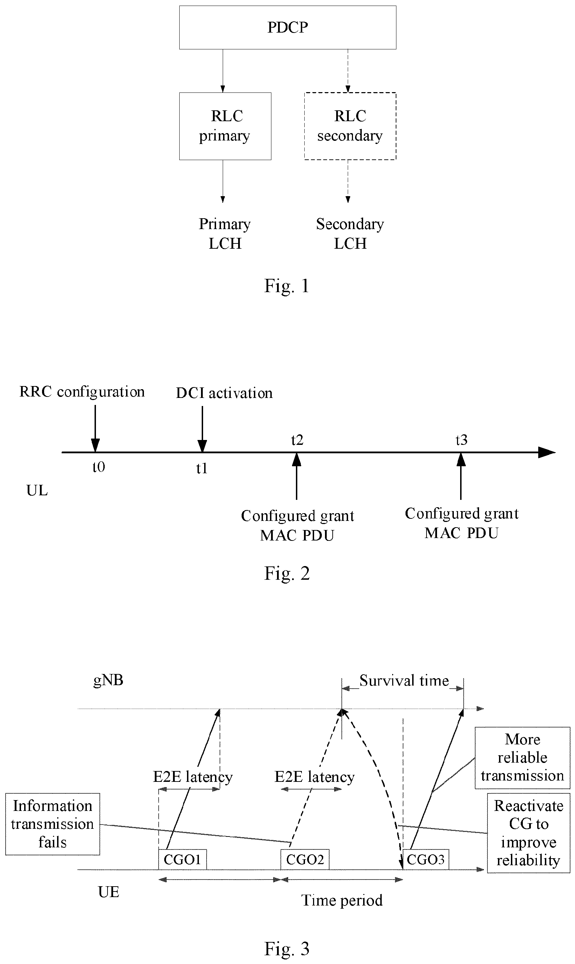

Duplication transmission refers to that: a network device may configure multiple corresponding radio link control (Radio Link Control, RLC) entities for a bearer, and a packet data convergence protocol (Packet Data Convergence Protocol, PDCP) entity may duplicate a PDCP protocol data unit (Protocol Data Unit, PDU) into multiple copies and simultaneously submit them to the multiple RLC entities, so as to improve reliability of data transmission. As shown in Fig. 1, PDCP represents a packet data convergence protocol entity, RLC primary represents a primary RLC entity, RLC secondary represents a second RLC entity, primary LCH represents a primary logical channel, and secondary LCH represents a second logical channel; the primary RLC entity refers to the primary logical channel (LCH) and correspondingly the second RLC entity refers to the second logical channel, and the quantity of the second logical channel may be more than one. In this way, the same data packet is transmitted through multiple independent transmission paths, improving reliability of the service and reducing the transmission latency, which has great benefits especially for ultra reliable low latency communications (Ultra Reliable Low Latency Communications, URLLC) service.

Currently, the network device may configure RLC entities for duplication in advance. When duplication transmission is required, the network device may trigger duplication by sending a MAC CE.

The MAC CE is carried on the physical downlink shared channel (Physical Downlink Shared Channel, PDCCH). After receiving the physical downlink control channel (Physical Downlink Control Channel, PDCCH), the terminal discovers a PDSCH corresponding to the terminal through decoding, and decodes data in the PDSCH and decodes the MAC CE, and then determines that the MAC CE is used to activate/deactivate PDCP duplication transmission. As a result, activation/deactivation of PDCP duplication transmission is performed. It can be seen that receiving the MAC CE results in a certain latency compared with receiving DCI.

Specifically, in a new radio (New Radio, NR) system, there is a problem of high overhead of the control channel due to the fact that each allocation needs corresponding DCI indication on a control channel PDCCH. For services such as voice over Internet protocol (Voice over Internet Protocol, VoIP), sizes of data packets are relatively fixed, and a time interval between the data packets follows certain rules. In view of this, a scheduling method of configured grant type2 (Configured grant type2) is introduced in the up link (Up Link, UL) in the NR. During the scheduling process of configured grant type2, configuration is performed through radio resource control (radio resource control, RRC) signaling, in addition, the RRC signaling specifies a period for the configured grant type2. Corresponding information such as modulation coding scheme (Modulation Coding Scheme, MCS) or resource location information is assigned for the configured grant type2 through the PDCCH, and the configured grant type2 is activated; the terminal stores the corresponding information and reuses it in subsequent scheduling cycles. For slots/symbols of transmission of the configured grant type2, the gNB may reallocate through a PDCCH a corresponding resource for transmission. The configured grant type2 is released through PDCCH instruction finally. Data transmission process of the configured grant type2 may be as shown in Fig. 2, the network device configures a configured grant of the above configured grant type2 through RRC, and activates it through DCI, and the terminal sends MAC protocol data units (Protocol Data Unit, PDU) of the configured grant at t2 and t3 respectively.

As shown in Fig. 3, in a case that data is transmitted at configured grant occasion 1 (Configured Grant Occasion 1, CGO1), there is an end-to-end E2E latency; in a case that data is transmitted at CGO2, there is an E2E latency, and if UL data transmission fails and the object of the network device (such as gNB) is to improve reliability of the configured grant (CG), then the network device may send a reactivation command for CG type2 within a survival time so as to reactivate CG to improve reliability; for example, the network device may reallocate parameters such as MCS and radio block (Radio Block, RB) in the reactivation command to improve reliability, and may also activate duplication transmission to achieve more reliable transmission. When an error in data transmission occurs, the survival time is started; if subsequent data can be transmitted correctly during validity of the survival time, the service transmission is considered as having availability; if the survival time expires and the data still cannot be transmitted correctly, the communication link between the original device and the target device is considered unavailable.

In the above, two methods are used to improve the reliability of subsequent transmission. However, due to the fact that the duplication transmission is achieved by using the MAC CE, the increased processing latency of the MAC CE may result in the terminal being unable to apply the latest configuration at the occasion CGO3, i.e., being unable to apply latest CG configuration and duplication transmission method.

Therefore, embodiments of the present disclosure provide a method and a device for reducing a latency, a terminal, and a device, to address to a certain degree a problem that performing a service transmission through a MAC CE results in an increased service transmission latency in conventional technologies.

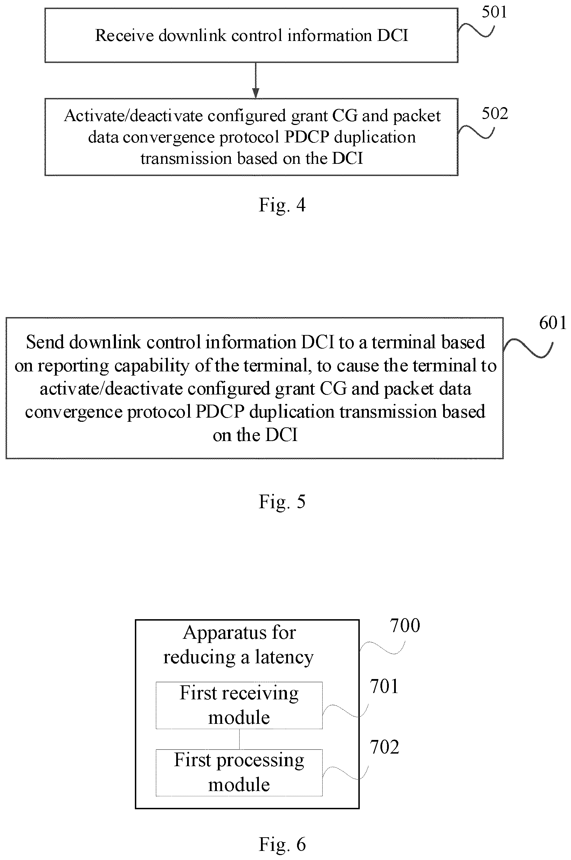

Specifically, as shown in Fig. 4, embodiments of the present disclosure provide a method for reducing a latency, which is applied to a terminal. The method specifically includes the following steps.

Step 501 includes receiving downlink control information DCI.

In the above embodiments, before step 501, the terminal sends terminal reporting capability to a network device, where the terminal reporting capability is used to indicate that the terminal is capable of activating/deactivating configured grant CG and PDCP duplication transmission. The network device sends the DCI to the terminal based on the reporting capability, and the terminal receives the DCI sent by the network device, where the DCI includes at least one kind of indication information.

Step 502 includes: activating/deactivating configured grant CG and packet data convergence protocol PDCP duplication transmission based on the DCI.

In the above embodiments, the terminal activates the configured grant CG and the PDCP duplication transmission based on the received DCI; or, the terminal deactivates the configured grant CG and the PDCP duplication transmission based on the received DCI.

In the above embodiments of the present disclosure, the terminal activates/deactivates the configured grant CG and the packet data convergence protocol PDCP duplication transmission based on the received downlink control information DCI, which can quickly activate/deactivate the PDCP duplication transmission and reduce the service transmission latency.

Optionally, the DCI includes one of the following.

A first item: first indication information for indicating carrier ID/carrier group ID for which PDCP duplication transmission is to be activated.

For example, if the first indication information indicates that the carrier ID for which PDCP duplication transmission is to be activated is 0, 1, 2, the terminal may activate PDCP duplication transmission on carrier 0, 1, 2, based on the first indication information; if the first indication information indicates that the carrier group ID for which PDCP duplication transmission is to be activated is 1, and a carrier group whose carrier group ID is 1 has carrier 0, 1, 3, then the terminal may activate PDCP duplication transmission on carrier 0, 1, 3, based on the first indication information.

Optionally, the first indication information for indicating the carrier ID/carrier group ID for which the PDCP duplication transmission is to be activated may be information of carrier indicator applied to cross-carrier scheduling. For example, after the terminal receives the DCI in service cell A, the terminal activates PDCP duplication transmission on the service cell A and cell B indicated by the carrier indicator.

A second item: second indication information for indicating carrier ID within a cell group for which activation is to be performed.

For example, the second indication information indicates that the carrier ID within the cell group for which activation is to be performed is 0, 3, 4, and the terminal may activate PDCP duplication transmission on carrier 0, 3, 4 based on the second indication information.

The cell group may represent a master cell group (Master cell group, MCG) or a secondary cell group (Secondary Cell Group, SCG). The service cells under the same network device (such as a base station) belong to one cell group.

A third item: third indication information for indicating carrier ID/carrier group ID for which PDCP duplication transmission is to be deactivated.

For example, when the terminal performs configured grant CG and PDCP duplication transmission, the network device detects that channel quality of the terminal is improved, then the network device may send DCI, where third indication information in DCI indicates carrier ID for which PDCP duplication transmission is to be deactivated. If the third indication information indicates that the carrier ID for which PDCP duplication transmission is to be deactivated is 0, 1, 2, the terminal may deactivate PDCP duplication transmission on carrier 0, 1, 2, based on the third indication information; if the third indication information indicates that the carrier group ID for which PDCP duplication transmission is to be deactivated is 2, and a carrier group whose carrier group ID is 2 has carrier 2, 4, then the terminal may deactivate PDCP duplication transmission on carrier 2, 4, based on the third indication information.

A fourth item: fourth indication information for indicating activation/deactivation of PDCP duplication transmission of a data radio bearer DRBm, i.e., the fourth indication information is used to instruct the terminal to activate/deactivate PDCP duplication transmission of DRBm.

For example, if the fourth indication information is used to instruct the terminal to activate PDCP duplication transmission of DRBm, and m includes 1, 2, and k, the fourth indication information is used to instruct the terminal to activate PDCP duplication transmission of DRB1, PDCP duplication transmission of DRB2, and PDCP duplication transmission of DRB K; in other words, the DCI indicates that DRB1, DRB2, and DRB K may activate PDCP duplication transmission by using the DCI method, that is, the terminal may perform PDCP duplication transmission of DRB1, DRB2, and DRB K, i.e., the terminal performs PDCP duplication transmission when transmitting data of DRB1, DRB2, and DRB K.

If the DCI contains a newly added bit, the terminal decodes the newly added bit contained in the DCI after receiving the DCI, where the newly added bit in the DCI is used to indicate carrier ID/carrier group ID for which PDCP duplication transmission is to be activated, or the newly added bit in the DCI is used to indicate carrier ID within a cell group for which activation is to be performed, or the newly added bit in the DCI is used to indicate carrier ID/carrier group ID for which PDCP duplication transmission is to be deactivated, or the newly added bit in the DCI is used to indicate activation/deactivation of PDCP duplication transmission of DRBm; in other words, the newly added bit in the DCI is used to indicate RLC entity on which carrier is to be activated/deactivated, or the newly added bit in the DCI is used to indicate PDCP duplication transmission of which type of DRB is to be activated/deactivated. For example, a newly added bit indicates carrier A, and the terminal may activate PDCP duplication transmission on the carrier A.

It should be noted that the terminal may determine whether to activate PDCP duplication transmission based on the newly added bit, that is, the terminal determines to activate PDCP duplication transmission or to deactivate PDCP duplication transmission based on the newly added bit. For example, if the newly added bit indicates 0, it represents deactivation of PDCP duplication transmission; if the newly added bit indicates 1, it represents activation of PDCP duplication transmission. Specifically, when the bit corresponding to the carrier group ID is 1, it represents activation of PDCP duplication transmission on the carrier corresponding to the current carrier group ID; when the bit corresponding to the carrier group ID is 0, it represents deactivation of PDCP duplication transmission on the carrier corresponding to the current carrier group ID.

Optionally, the terminal activates, based on a pre-configured mapping relationship between a date radio bearer DRB m and a carrier/carrier group, PDCP duplication transmission of the DRB m correspondingly when activating PDCP duplication transmission on the carrier/carrier group.

In the above embodiments, the network device may pre-configure the mapping relationship between the data radio bearer DRB m and the carrier/carrier group, and the terminal may activate, based on the pre-configured mapping relationship between the DRB m and the carrier/carrier group, PDCP duplication transmission of the DRB m correspondingly when activating PDCP duplication transmission on the carrier/carrier group.

For example, if the network device configures the DRB m to be corresponding to carrier n and carrier k, then the terminal activates PDCP duplication transmission of the DRB m correspondingly when activating PDCP duplication transmission on the carrier n and the carrier k, that is, the terminal may activate PDCP duplication transmission of the DRB m on the carrier n and the carrier k based on the pre-configured mapping relationship between the DRB m and the carrier n and the carrier k.

Optionally, the DCI may also include: an index of the configured grant CG.

Optionally, the DCI may also include: reactivation information for the configured grant CG, such as updated MCS, RB information.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

In the above embodiments, the carrier used by the terminal to receive the DCI is considered as the main carrier, and the carrier corresponding to the carrier ID indicated by the DCI is considered as the secondary carrier or the carrier corresponding to the carrier group ID indicated by the DCI is considered as the secondary carrier, that is, the secondary carrier may be one or more carriers.

For example, if the terminal receives DCI on carrier B and a newly added bit in the DCI indicates that a carrier corresponding to carrier ID for which PDCP duplication transmission is to be activated is carrier C, then the terminal may activate PDCP duplication transmission on the carrier B and the carrier C. If the terminal receives DCI on carrier B, and a newly added bit in the DCI indicates that a carrier corresponding to carrier ID within a cell group for which activation is to be performed is carrier D, then the terminal may activate PDCP duplication transmission on the carrier B and the carrier D. If the terminal receives DCI on carrier B, and a newly added bit in the DCI indicates that carriers corresponding to carrier group ID for which PDCP duplication transmission is to be activated are carrier E and carrier F, the terminal may activate PDCP duplication transmission on the carrier B, the carrier E, and the carrier F.

Optionally, in a case that the DCI includes the first indication information or the second indication information, the activating/deactivating the configured grant CG and the packet data convergence protocol PDCP duplication transmission based on the DCI in step 502 may specifically include:
activating or reactivating, based on the DCI, the CG on a carrier corresponding to the carrier ID/carrier group ID indicated by the DCI and performing the PDCP duplication transmission on the carrier corresponding to the carrier ID/carrier group ID.

In the above embodiments, since the DCI includes the first indication information for indicating the carrier ID/carrier group ID for which the PDCP duplication transmission is to be activated, or the DCI includes the second indication information for indicating the carrier ID within the cell group for which the activation is to be performed, or the DCI includes the third indication information for indicating the carrier ID/carrier group ID for which the PDCP duplication transmission is to be deactivated, the terminal may activate/reactivate the CG on the carrier corresponding to the carrier ID/carrier group ID indicated by the DCI based on the received DCI and perform the PDCP duplication transmission on the carrier corresponding to the carrier ID/carrier group ID.

Specifically, if the DCI includes the first indication information for indicating the carrier ID/carrier group ID for which the PDCP duplication transmission is to be activated, the terminal activates/reactivates CG on the carrier corresponding to the carrier ID/carrier group ID indicated by the first indication information based on the first indication information contained in the DCI, and performs PDCP duplication transmission on the carrier corresponding to the carrier ID/carrier group ID. If the DCI includes the second indication information for indicating the carrier ID within the cell group for which the activation is to be performed, the terminal activates/reactivates CG on the carrier corresponding to the carrier ID indicated by the second indication information based on the second indication information contained in the DCI, and performs PDCP duplication transmission on the carrier corresponding to the carrier ID.

Optionally, in a case that the DCI includes the third indication information, the activating/deactivating the configured grant CG and the packet data convergence protocol PDCP duplication transmission based on the DCI in step 502 may specifically include the following two manners.

A first manner includes: deactivating, based on the DCI, the CG and the PDCP duplication transmission on a carrier corresponding to the carrier ID/carrier group ID indicated by the DCI.

In the first manner mentioned above, if the third indication information indicates the carrier ID for which PDCP duplication transmission is to be deactivated, the terminal deactivates the CG and the PDCP duplication transmission on the carrier corresponding to the carrier ID indicated by the third indication information based on the third indication information, and returns to the service carrier (i.e., the main carrier receiving the DCI or the carrier indicated by the carrier indicator); if the third indication information indicates the carrier group ID for which PDCP duplication transmission is to be deactivated, the terminal deactivates the CG and the PDCP duplication transmission on the carrier corresponding to the carrier group ID indicated by the third indication information based on the third indication information.

A second manner includes: deactivating, based on the DCI, the CG and the PDCP duplication transmission on all carriers.

In the second manner mentioned above, if the third indication information indicates carrier ID/carrier group ID for which PDCP duplication transmission is to be deactivated, the terminal deactivates the CG and the PDCP duplication transmission on all carriers.

Optionally, the method may also include the following step:
receiving a first signaling, where the first signaling is used to configure a mapping relationship between the carrier ID indicated by the DCI and a carrier, or the first signaling is used to configure a mapping relationship between the carrier group ID indicated by the DCI and a carrier group.

In the above embodiments, the terminal receives the first signaling (such as RRC signaling) sent by the network device, where the first signaling is used to configure the mapping relationship between the secondary carrier ID and the secondary carrier, or the first signaling is used to configure the mapping relationship between the secondary carrier group ID and the secondary carrier group. For example, the network device configures carrier 1 to be corresponding to ID1, carrier 2 to be corresponding to ID2, ... , and carrier N to be corresponding to ID N, which forms a bit stream. In a case of ID m=1 in the bit received by the terminal, it represents that the carrier m corresponding to ID m is to be activated, and the terminal may perform PDCP duplication transmission on the service carrier (i.e., the main carrier receiving the DCI, or the carrier indicated by the carrier indicator) and the carrier m; in a case of ID m=0 in the bit received by UE, it represents that the carrier corresponding to ID m is to be deactivated.

Optionally, the step of activating or reactivating the CG on the carrier corresponding to the carrier ID/carrier group ID indicated by the DCI and performing the PDCP duplication transmission on the carrier corresponding to the carrier ID/carrier group ID based on the DCI may specifically include the following:
receiving a second signaling, where the second signaling is used to configure a data radio bearer for performing activation/deactivation of the PDCP duplication transmission; and
activating or reactivating, based on the DCI and the second signaling, the CG on the carrier corresponding to the carrier ID/carrier group ID indicated by the DCI and performing the PDCP duplication transmission of the data radio bearer on the carrier corresponding to the carrier ID/carrier group ID.

In the above embodiments, the terminal receives the second signaling (such as RRC signaling) sent by the network device, where the second signaling is used to configure the data radio bearer for performing activation/deactivation of the PDCP duplication transmission, that is, the second signaling is used to configure which data radio bearers may be configured to perform PDCP duplication transmission. The terminal may activate or reactive, based on the DCI and the second signaling, the CG on the carrier corresponding to the carrier ID/carrier group ID indicated by the DCI and perform the PDCP duplication transmission of the data radio bearer on the carrier corresponding to the carrier ID/carrier group ID.

For example, the terminal performs PDCP duplication transmission for data of logical channel i, where the logical channel i may be pre-configured by the network device based on logical channel. For example, the network device configures DRB 1, DRB2, and DRB K to be capable of using the DCI method to activate PDCP duplication transmission, that is, the network device configures PDCP duplication transmission for DRB 1, DRB2, and DRB K, and the terminal may perform PDCP duplication transmission for the DRB1, the DRB2, and the DRB K, i.e., the terminal performs PDCP duplication transmission when transmitting data of DRB 1, DRB2, and DRB K.

Optionally, the step of activating or reactivating the CG on the carrier corresponding to the carrier ID/carrier group ID indicated by the DCI and performing the PDCP duplication transmission on the carrier corresponding to the carrier ID/carrier group ID based on the DCI may specifically include the following:
activating or reactivating, based on a pre-configured data radio bearer corresponding to the configured grant CG and the DCI, the CG on the carrier corresponding to the carrier ID/carrier group ID indicated by the DCI and performing the PDCP duplication transmission of the data radio bearer on the carrier corresponding to the carrier ID/carrier group ID.

In the above embodiments, the terminal determines the data radio bearer of the PDCP duplication transmission based on the pre-configured data radio bearer corresponding to the configured grant CG. In this way, the terminal may activate or reactivate, based on the DCI and the pre-configured data radio bearer corresponding to the configured grant CG, the CG on the carrier corresponding to the carrier ID/carrier group ID indicated by the DCI and perform the PDCP duplication transmission of the data radio bearer on the carrier corresponding to the carrier ID/carrier group ID. For example, the network device configures configured grant CG that can be used for logical channel 1, 2, and the terminal activates/deactivates the configured grant of the logical channel 1, 2, after receiving the DCI, and activates/deactivates the PDCP duplication transmission on the logical channel 1, 2.

Optionally, the DCI is fifth indication information for activating/deactivating the CG.

In the above embodiments, if the terminal receives the fourth instruction information for activating/deactivating the CG sent by the network device, the terminal activates/deactivates the CG based on the fourth instruction information and needs to activate/deactivate the PDCP duplication transmission.

In conclusion, according to the embodiments of the present disclosure, the terminal activates/deactivates the configured grant CG and the packet data convergence protocol PDCP duplication transmission based on the received downlink control information DCI, which can quickly activate/deactivate the PDCP duplication transmission and reduce the service transmission latency.

As shown in Fig. 5, embodiments of the present disclosure provide a method for reducing a latency, which is applied to a network device. The method specifically includes the following step.

Step 601 includes: sending downlink control information DCI to a terminal based on reporting capability of the terminal, to cause the terminal to activate/deactivate configured grant CG and packet data convergence protocol PDCP duplication transmission based on the DCI.

In the above embodiments, the network device sends the DCI to the terminal based on the reporting capability of the terminal, to cause the terminal to activate the configured grant CG and the PDCP duplication transmission based on the received DCI; or to cause the terminal to deactivate the configured grant CG and the PDCP duplication transmission based on the received DCI. The reporting capability of the terminal may be sent by the terminal to the network device, or the network device may obtain it through other manners, which is not specifically limited herein.

In the above embodiments of the present disclosure, the network device sends the DCI to the terminal based on the reporting capability of the terminal, to enable the terminal to activate/deactivate the configured grant CG and the PDCP duplication transmission based on the DCI. In this way, the PDCP duplication transmission can be quickly activated/deactivated and the service transmission latency can be reduced.

Optionally, the DCI includes one of the following.

A first item: first indication information for indicating carrier ID/carrier group ID for which PDCP duplication transmission is to be activated.

For example, if the first indication information indicates that the carrier ID for which PDCP duplication transmission is to be activated is 0, 1, 2, the terminal may be caused to activate PDCP duplication transmission on carrier 0, 1, 2, based on the first indication information; if the first indication information indicates that the carrier group ID for which PDCP duplication transmission is to be activated is 1, and a carrier group whose carrier group ID is 1 has carrier 0, 1, 3, then the terminal may be caused to activate PDCP duplication transmission on carrier 0, 1, 3, based on the first indication information.

Optionally, the first indication information for indicating the carrier ID/carrier group ID for which the PDCP duplication transmission is to be activated may be information of carrier indicator applied to cross-carrier scheduling. For example, after the terminal receives the DCI in service cell A, the terminal activates PDCP duplication transmission on the service cell A and cell B indicated by the carrier indicator.

A second item: second indication information for indicating carrier ID within a cell group for which activation is to be performed.

For example, the second indication information indicates that the carrier ID within the cell group for which activation is to be performed is 0, 3, 4, and the terminal may be caused to activate PDCP duplication transmission on carrier 0, 3, 4 based on the second indication information.

The cell group may represent a master cell group (Master cell group, MCG) or a secondary cell group (Secondary Cell Group, SCG). The service cells under the same network device (such as a base station) belong to one cell group.

A third item: third indication information for indicating carrier ID/carrier group ID for which PDCP duplication transmission is to be deactivated.

For example, when the terminal performs configured grant CG and PDCP duplication transmission, the network device detects that channel quality of the terminal is improved, then the network device may send DCI, where third indication information in DCI indicates carrier ID for which PDCP duplication transmission is to be deactivated. If the third indication information indicates that the carrier ID for which PDCP duplication transmission is to be deactivated is 0, 1, 2, the terminal may be caused to deactivate PDCP duplication transmission on carrier 0, 1, 2, based on the third indication information; if the third indication information indicates that the carrier group ID for which PDCP duplication transmission is to be deactivated is 2, and a carrier group whose carrier group ID is 2 has carrier 2, 4, then the terminal may be caused to deactivate PDCP duplication transmission on carrier 2, 4, based on the third indication information.

A fourth item: fourth indication information for indicating activation/deactivation of PDCP duplication transmission of a data radio bearer DRBm, i.e., the fourth indication information is used to instruct the terminal to activate/deactivate PDCP duplication transmission of DRBm.

For example, if the fourth indication information is used to instruct the terminal to activate PDCP duplication transmission of DRBm, and m includes 1, 2, and k, the fourth indication information is used to instruct the terminal to activate PDCP duplication transmission of DRB 1, PDCP duplication transmission of DRB2, and PDCP duplication transmission of DRB K; in other words, the DCI indicates that DRB 1, DRB2, and DRB K may activate PDCP duplication transmission by using the DCI method, that is, the terminal may perform PDCP duplication transmission of DRB1, DRB2, and DRB K, i.e., the terminal performs PDCP duplication transmission when transmitting data of DRB1, DRB2, and DRB K.

If the DCI contains a newly added bit, the newly added bit in the DCI is used to indicate carrier ID/carrier group ID for which PDCP duplication transmission is to be activated, or the newly added bit in the DCI is used to indicate carrier ID within a cell group for which activation is to be performed, or the newly added bit in the DCI is used to indicate carrier ID/carrier group ID for which PDCP duplication transmission is to be deactivated, or the newly added bit in the DCI is used to indicate activation/deactivation of PDCP duplication transmission of DRBm; in other words, the newly added bit in the DCI is used to indicate RLC entity on which carrier is to be activated/deactivated, or the newly added bit in the DCI is used to indicate PDCP duplication transmission of which type of DRB is to be activated/deactivated. For example, a newly added bit indicates carrier A, and the terminal may activate PDCP duplication transmission on the carrier A.

It should be noted that the terminal may determine whether to activate PDCP duplication transmission based on the newly added bit, that is, the terminal determines to activate PDCP duplication transmission or to deactivate PDCP duplication transmission based on the newly added bit. For example, if the newly added bit indicates 0, it represents that deactivation of PDCP duplication transmission is needed; if the newly added bit indicates 1, it represents that activation of PDCP duplication transmission is needed. Specifically, when the bit corresponding to the carrier group ID is 1, it represents that activation of PDCP duplication transmission on the carrier corresponding to the current carrier group ID is needed; when the bit corresponding to the carrier group ID is 0, it represents that deactivation of PDCP duplication transmission on the carrier corresponding to the current carrier group ID is needed.

Optionally, the network device pre-configures a mapping relationship between a data radio bearer DRB m and a carrier/carrier group, to cause the terminal to activate PDCP duplication transmission of the DRB m correspondingly when activating PDCP duplication transmission on the carrier/carrier group.

In the above embodiments, the network device may pre-configure the mapping relationship between the data radio bearer DRB m and the carrier/carrier group, and the terminal may activate, based on the pre-configured mapping relationship between the DRB m and the carrier/carrier group, PDCP duplication transmission of the DRB m correspondingly when activating PDCP duplication transmission on the carrier/carrier group.

For example, the network device configures the DRB m to be corresponding to carrier n and carrier k, and the terminal activates PDCP duplication transmission of the DRB m correspondingly when activating PDCP duplication transmission on the carrier n and the carrier k, that is, the terminal may activate PDCP duplication transmission of the DRB m on the carrier n and the carrier k based on the pre-configured mapping relationship between the DRB m and the carrier n and the carrier k.

Optionally, the DCI may also include: an index of the configured grant CG.

Optionally, the DCI may also include: reactivation information for the configured grant CG, such as updated MCS, RB information.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

In the above embodiments, the carrier used by the terminal to receive the DCI is considered as the main carrier, and the carrier corresponding to the carrier ID indicated by the DCI is considered as the secondary carrier or the carrier corresponding to the carrier group ID indicated by the DCI is considered as the secondary carrier, that is, the secondary carrier may be one or more carriers.

For example, if the terminal receives DCI on carrier B and a newly added bit in the DCI indicates that a carrier corresponding to carrier ID for which PDCP duplication transmission is to be activated is carrier C, then the terminal may activate PDCP duplication transmission on the carrier B and the carrier C. If the terminal receives DCI on carrier B, and a newly added bit in the DCI indicates that a carrier corresponding to carrier ID within a cell group for which activation is to be performed is carrier D, then the terminal may activate PDCP duplication transmission on the carrier B and the carrier D. If the terminal receives DCI on carrier B, and a newly added bit in the DCI indicates that carriers corresponding to carrier group ID for which PDCP duplication transmission is to be activated are carrier E and carrier F, the terminal may activate PDCP duplication transmission on the carrier B, the carrier E, and the carrier F.

Optionally, the method may also include the following step:
sending a first signaling to the terminal, where the first signaling is used to configure a mapping relationship between the carrier ID indicated by the DCI and a carrier, or the first signaling is used to configure a mapping relationship between the carrier group ID indicated by the DCI and a carrier group.

In the above embodiments, the network device configures the mapping relationship between the secondary carrier ID and the secondary carrier through the first signaling (such as RRC signaling), or the network device configures the mapping relationship between the secondary carrier group ID and the secondary carrier group through the first signaling. For example, the network device configures carrier 1 to be corresponding to ID1, carrier 2 to be corresponding to ID2, ... , and carrier N to be corresponding to ID N, which forms a bit stream. In a case of ID m=1 in the bit received by the terminal, it represents that the carrier m corresponding to ID m needs to be activated, and the terminal may perform PDCP duplication transmission on the service carrier (i.e., the main carrier receiving the DCI, or the carrier indicated by the carrier indicator) and the carrier m; in a case of ID m=0 in the bit received by UE, it represents that the carrier corresponding to ID m needs to be deactivated.

Optionally, the method may also include the following step:
sending a second signaling to the terminal, where the second signaling is used to configure a data radio bearer for performing activation/deactivation of the PDCP duplication transmission.

In the above embodiments, the network device configures the data radio bearer for performing activation/deactivation of the PDCP duplication transmission through the second signaling (such as RRC signaling), that is, the network device configures, through the second signaling, which data radio bearers may be configured to perform PDCP duplication transmission, to cause the terminal to activate or reactive the CG on the carrier corresponding to the carrier ID/carrier group ID indicated by the DCI and to cause the terminal to perform the PDCP duplication transmission of the data radio bearer on the carrier corresponding to the carrier ID/carrier group ID, based on the DCI and the second signaling.

For example, the network device may pre-configure PDCP duplication transmission to be capable of being performed for data of logical channel i. For example, the network device configures DRB1, DRB2, and DRB K to be capable of using the DCI method to activate PDCP duplication transmission, that is, the network device configures PDCP duplication transmission for DRB1, DRB2, and DRB K, and the terminal may perform PDCP duplication transmission for the DRB1, the DRB2, and the DRB K, i.e., the terminal performs PDCP duplication transmission when transmitting data of DRB1, DRB2, and DRB K.

Optionally, the DCI is fifth indication information for activating/deactivating the CG.

In the above embodiments, if the DCI sent by the network device is the fifth indication information, the terminal may activate/deactivate the CG based on the fifth indication information, and needs to activate/deactivate the PDCP duplication transmission.

The following is detailed description where the technical solutions according to the present disclosure are applied to specific embodiments.

Embodiment 1 (a newly added bit in DCI indicates carrier ID for which activation is to be performed):
Step 1: the terminal sends terminal reporting capability to the network device, where the terminal reporting capability is used to indicate that the terminal is capable of activating/deactivating configured grant CG and PDCP duplication transmission.
Step 2: the network device sends downlink control information DCI to the terminal based on the terminal reporting capability, where the DCI includes one of the following:
   a first item: first indication information for indicating carrier ID for which PDCP duplication transmission is to be activated;
   a second item: second indication information for indicating carrier ID within a cell group for which activation is to be performed.

Optionally, the DCI may also include: an index of the configured grant CG.

Optionally, the DCI may also include: reactivation information for the configured grant CG, such as updated MCS, RB information.

Step 3: the terminal receives the DCI, and activates or reactivates the configured grant CG on the carrier ID based on the carrier ID indicated by the DCI, and performs the PDCP duplication transmission on the carrier corresponding to the carrier ID.

Optionally, the carrier used by the UE to receive the DCI is a main path (main leg) of PDCP duplication transmission, and the carrier corresponding to the carrier ID indicated by the DCI is a secondary path (secondary leg) of PDCP duplication transmission.

Embodiment 2 (a newly added bit in DCI indicates carrier group ID for which activation is to be performed):
Step 1: the terminal sends terminal reporting capability to the network device, where the terminal reporting capability indicates that the terminal is capable of activating/deactivating configured grant CG and PDCP duplication transmission.
Step 2: the network device configures the carrier group for PDCP duplication transmission based on the terminal reporting capability; for example, carrier group 1 for PDCP duplication transmission corresponds to carrier 0, carrier 1, carrier 3; carrier group 2 for PDCP duplication transmission corresponds to carrier 2, carrier 4, etc.
Step 3: the network device sends downlink control information DCI to the terminal based on the terminal reporting capability, where the DCI includes:
first indication information for indicating carrier group ID for which PDCP duplication transmission is to be activated.

Optionally, the DCI may also include: an index of the configured grant CG.

Optionally, the DCI may also include: reactivation information for the configured grant CG, such as updated MCS, RB information.

Step 4: the terminal receives the DCI and activates or reactivates the configured grant CG on the carrier corresponding to the carrier group ID according to the carrier group ID indicated by the DCI, and performs PDCP duplication transmission on the carrier corresponding to the carrier group ID.

Optionally, the carrier used by the UE to receive the DCI is a main path (main leg) of PDCP duplication transmission, and the carrier corresponding to the carrier ID indicated by the DCI is a secondary path (secondary leg) of PDCP duplication transmission.

Embodiment 3 (a newly added bit in DCI indicates carrier ID for which deactivation is to be performed):
Step 1: the terminal sends terminal reporting capability to the network device, where the terminal reporting capability indicates that the terminal is capable of activating/deactivating configured grant CG and PDCP duplication transmission.
Step 2: the network device detects, based on the terminal reporting capability, that channel quality of the terminal is improved, and PDCP duplication transmission need to be deactivated, then the network device sends downlink control information DCI to the terminal, where the DCI includes third indication information for indicating carrier ID for which PDCP duplication transmission is to be deactivated.

When the third indication information indicates that the newly added bit is 0, it represents that activation of PDCP duplication transmission on all carriers is needed;
When the third indication information indicates that the newly added bit is 1, it represents that activation of the configured grant CG and the PDCP duplication transmission is needed. For the specific carrier that needs to be activated, reference can be made to the determination of the carrier ID indicated by the DCI in Example 1 or Example 2, which is not described in detail herein.

### Embodiment 4 (based on Embodiment 1):

Step 4: the network device may pre-configure PDCP duplication transmission to be capable of being performed for data of logical channel i, where the logical channel i may be pre-configured by the network device based on logical channel. For example, the network device may configure DRB1, DRB2, and DRB K to be capable of using the DCI method to activate PDCP duplication transmission, that is, the network device configures PDCP duplication transmission for DRB1, DRB2, and DRB K, and the terminal may perform PDCP duplication transmission for the DRB1, the DRB2, and the DRB K, i.e., the terminal performs PDCP duplication transmission when transmitting data of DRB1, DRB2, and DRB K.

Or,
the terminal determines the data radio bearer of the PDCP duplication transmission based on the pre-configured data radio bearer corresponding to the configured grant CG. In this way, the terminal may activate or reactivate, based on the DCI and the pre-configured data radio bearer corresponding to the configured grant CG, the CG on the carrier corresponding to the carrier ID/carrier group ID indicated by the DCI and perform the PDCP duplication transmission of the data radio bearer on the carrier corresponding to the carrier ID/carrier group ID. For example, the network device configures configured grant CG that can be used for logical channel 1, 2, and the terminal activates/deactivates the configured grant of the logical channel 1, 2, after receiving the DCI, and activates/deactivates the PDCP duplication transmission on the logical channel 1, 2.

### Embodiment 5:

Step 1: the terminal sends terminal reporting capability to the network device, where the terminal reporting capability is used to indicate that the terminal is capable of activating/deactivating configured grant CG and PDCP duplication transmission.

Step 2: the network device sends downlink control information DCI to the terminal based on the terminal reporting capability, where the DCI is fifth indication information for activating/deactivating the CG.

Step 3: if the terminal receives the fifth indication information for activating/deactivating the CG sent by the network device, the terminal activates/deactivates the CG based on the fifth indication information and needs to activate/deactivate the PDCP duplication transmission.

In conclusion, according to the embodiments of the present disclosure, the network device sends the DCI to the terminal based on the terminal reporting capability, and the terminal receives the DCI and activates/deactivates the configured grant CG and the PDCP duplication transmission based on the received DCI, which can quickly activate/deactivate the PDCP duplication transmission and reduce the service transmission latency. In this way, the PDCP duplication transmission can be quickly activated/deactivated and the service transmission latency can be reduced.

The method for reducing the latency according to the embodiments of the present disclosure is introduced in the above. In the following, a device for reducing a latency according to embodiments of the present disclosure will be described in conjunction with the accompanying drawings.

Referring to Fig. 6, embodiments of the present disclosure also provide an apparatus 700 for reducing a latency, applied to a terminal, including:
a first receiving module 701, configured to receive downlink control information DCI; and
a first processing module 702, configured to activate/deactivate configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, in a case that the DCI includes the first indication information or the second indication information,, the first processing module 702 includes:
a first processing unit, configured to activate or reactivate, based on the DCI, the CG on a carrier corresponding to the carrier ID/carrier group ID indicated by the DCI and perform the PDCP duplication transmission on the carrier corresponding to the carrier ID/carrier group ID.

Optionally, the cell group represents a master cell group MCG or a secondary cell group SCG.

Optionally, in a case that the DCI includes the third indication information,, the first processing module includes:
a second processing unit, configured to deactivate, based on the DCI, the CG and the PDCP duplication transmission on a carrier corresponding to the carrier ID/carrier group ID indicated by the DCI;
or,
a third processing unit, configured to deactivate, based on the DCI, the CG and the PDCP duplication transmission on all carriers.

Optionally, the apparatus further includes:
a second receiving module, configured to receive a first signaling, where the first signaling is used to configure a mapping relationship between the carrier ID indicated by the DCI and a carrier, or the first signaling is used to configure a mapping relationship between the carrier group ID indicated by the DCI and a carrier group.

Optionally, the first processing unit includes:
a first receiving subunit, configured to receiving a second signaling, where the second signaling is used to configure a data radio bearer for performing activation/deactivation of the PDCP duplication transmission; and
a first processing subunit, configured to activate or reactivate , based on the DCI and the second signaling, the CG on the carrier corresponding to the carrier ID/carrier group ID indicated by the DCI and perform the PDCP duplication transmission of the data radio bearer on the carrier corresponding to the carrier ID/carrier group ID.

Optionally, the first processing unit includes:
a second processing subunit, configured to activate or reactivate, based on a pre-configured data radio bearer corresponding to the configured grant CG and the DCI, the CG on the carrier corresponding to the carrier ID/carrier group ID indicated by the DCI and perform the PDCP duplication transmission of the data radio bearer on the carrier corresponding to the carrier ID/carrier group ID.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

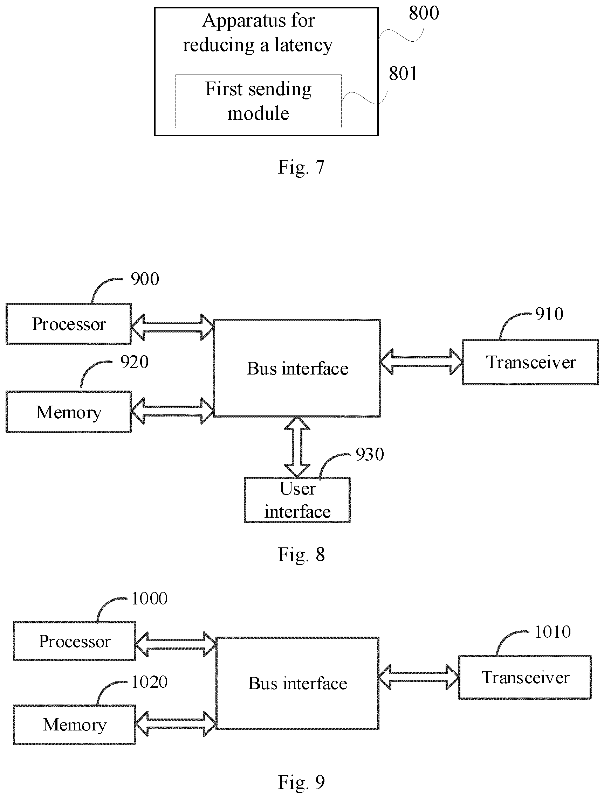

Referring to Fig. 7, embodiments of the present disclosure also provide an apparatus 800 for reducing a latency, applied to a network device, including:
a first sending module 801, configured to send downlink control information DCI to a terminal based on reporting capability of the terminal, to cause the terminal to activate/deactivate configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, the cell group represents a master cell group MCG or a secondary cell group SCG.

Optionally, the apparatus further includes:
a second sending module, configured to send a first signaling to the terminal, where the first signaling is used to configure a mapping relationship between the carrier ID indicated by the DCI and a carrier, or the first signaling is used to configure a mapping relationship between the carrier group ID indicated by the DCI and a carrier group.

Optionally, the apparatus further includes:
a third sending module, configured to send a second signaling to the terminal, where the second signaling is used to configure a data radio bearer for performing activation/deactivation of the PDCP duplication transmission.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

It should be noted that the device according to the embodiments of the present disclosure may implement all method steps in the above method embodiments, and the same technical effects can be achieved. Parts of and beneficial effects of the embodiments which are the same as those of the method embodiments are not described in detail in this place.

As shown in Fig. 8, embodiments of the present disclosure also provide a terminal, including a memory, a transceiver, and a processor;
the memory 920 is configured to store a computer program;
the transceiver 910 is configured to transmit and receive data under control of the processor;
the processor 900 is configured to read the computer program in the memory and perform following operations;
receiving downlink control information DCI; and
activating/deactivating configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, in a case that the DCI includes the first indication information or the second indication information, the activating/deactivating the configured grant CG and the packet data convergence protocol PDCP duplication transmission based on the DCI includes:
activating or reactivating, based on the DCI, the CG on a carrier corresponding to the carrier ID/carrier group ID indicated by the DCI and performing the PDCP duplication transmission on the carrier corresponding to the carrier ID/carrier group ID.

Optionally, the cell group represents a master cell group MCG or a secondary cell group SCG.

Optionally, in a case that the DCI includes the third indication information, the activating/deactivating the configured grant CG and the packet data convergence protocol PDCP duplication transmission based on the DCI includes:
deactivating, based on the DCI, the CG and the PDCP duplication transmission on a carrier corresponding to the carrier ID/carrier group ID indicated by the DCI; or,
deactivating, based on the DCI, the CG and the PDCP duplication transmission on all carriers.

Optionally, the processor 900 is further configured to:
receive a first signaling, where the first signaling is used to configure a mapping relationship between the carrier ID indicated by the DCI and a carrier, or the first signaling is used to configure a mapping relationship between the carrier group ID indicated by the DCI and a carrier group.

Optionally, the activating or reactivating the CG on the carrier corresponding to the carrier ID/carrier group ID indicated by the DCI and performing the PDCP duplication transmission on the carrier corresponding to the carrier ID/carrier group ID based on the DCI includes:
receiving a second signaling, where the second signaling is used to configure a data radio bearer for performing activation/deactivation of the PDCP duplication transmission; and
activating or reactivating, based on the DCI and the second signaling, the CG on the carrier corresponding to the carrier ID/carrier group ID indicated by the DCI and performing the PDCP duplication transmission of the data radio bearer on the carrier corresponding to the carrier ID/carrier group ID.

Optionally, the activating or reactivating the CG on the carrier corresponding to the carrier ID/carrier group ID indicated by the DCI and performing the PDCP duplication transmission on the carrier corresponding to the carrier ID/carrier group ID based on the DCI includes:
activating or reactivating, based on a pre-configured data radio bearer corresponding to the configured grant CG and the DCI, the CG on the carrier corresponding to the carrier ID/carrier group ID indicated by the DCI and performing the PDCP duplication transmission of the data radio bearer on the carrier corresponding to the carrier ID/carrier group ID.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

In FIG. 8, a bus architecture may include any quantity of interconnected buses and bridges. Various circuits including one or more processors represented by the processor 900 and a memory represented by the memory 920 are linked. The bus architecture may further link various other circuits together, such as a periphery component, a voltage stabilizer and a power management circuit, which are known in the art and are not further described herein. A bus interface provides an interface. The transceiver 910 may be multiple elements, i.e., including a transmitter and a receiver, providing a unit for communicating with various other devices on transmission media. The transmission media include a wireless channel, a wired channel, an optical cable, or other transmission media. For different user equipments, the user interface 930 may be an interface capable of connecting externally and internally with the required equipment. The connected equipment includes but not limited to a keypad, a display, a speaker, a microphone, a joystick, etc.

The processor 900 is in charge of managing the bus architecture and common processes. The memory 920 may store data used by the processor 901 in performing operations.

Optionally, the processor 900 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

It should be noted that the terminal according to the embodiments of the present disclosure may implement all steps of the embodiments of the method for reducing the latency applied to the terminal, and the same technical effects can be achieved. Parts of and beneficial effects of the embodiments which are the same as those of the method embodiments are not described in detail in this place.

As shown in Fig. 9, embodiments of the present disclosure also provide a network device, including a memory, a transceiver, and a processor;
the memory 1020 is configured to store a computer program;
the transceiver 1010 is configured to transmit and receive data under control of the processor 1000;
the processor 1000 is configured to read the computer program in the memory and perform following operation:
sending downlink control information DCI to a terminal based on reporting capability of the terminal, to cause the terminal to activate/deactivate configured grant CG and packet data convergence protocol PDCP duplication transmission based on the DCI.

Optionally, the DCI includes one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

Optionally, the cell group represents a master cell group MCG or a secondary cell group SCG.

Optionally, the processor 1000 is further configured to:
send a first signaling to the terminal, where the first signaling is used to configure a mapping relationship between the carrier ID indicated by the DCI and a carrier, or the first signaling is used to configure a mapping relationship between the carrier group ID indicated by the DCI and a carrier group.

Optionally, the processor 1000 is further configured to:
send a second signaling to the terminal, where the second signaling is used to configure a data radio bearer for performing activation/deactivation of the PDCP duplication transmission.

Optionally, a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

Optionally, the DCI is fifth indication information for activating/deactivating the CG.

In FIG. 9, a bus architecture may include any quantity of interconnected buses and bridges. Various circuits including one or more processors represented by the processor 1000 and a memory represented by the memory 1020 are linked. The bus architecture may further link various other circuits together, such as a periphery component, a voltage stabilizer and a power management circuit, which are known in the art and are not further described herein. A bus interface provides an interface. The transceiver 1010 may be multiple elements, i.e., including a transmitter and a receiver, providing a unit for communicating with various other devices on transmission media. The transmission media include a wireless channel, a wired channel, an optical cable, or other transmission media. The processor 1000 is in charge of managing the bus architecture and common processes. The memory 1020 may store data used by the processor 901 in performing operations.

The processor 1000 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

It should be noted that the network device according to the embodiments of the present disclosure may implement all steps of the method for reducing the latency applied to the network device, and the same technical effects can be achieved. Parts of and beneficial effects of the embodiments which are the same as those of the method embodiments are not described in detail in this place.

Embodiments of the present disclosure also provide a processor readable storage medium, where the processor readable storage medium stores a computer program used to cause the processor to execute the method for reducing the latency applied to the terminal or the method for reducing the latency applied to the network device.

The processor readable storage medium may be any available medium or data storage device that the processor may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

The present application is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

The device embodiments described above are only schematic. The units described as separate components may or may not be physically separated, and the components shown as units may or may not be physical units, that is, they may be located in one place or distributed over multiple network units. Some or all of the units may be selected according to practical needs to achieve the object of the technical solutions of the embodiments of the present disclosure. A person ordinary skilled in the art can understand and implement without any creative efforts.

The various component embodiments in the present disclosure may be implemented in hardware, software modules running on one or more processors, or a combination of them. A person skilled in the art should understand that a microprocessor or a digital signal processor (DSP) may be used in practice to achieve some or all functions of some or all components in the computing processing equipment according to the embodiments of the present disclosure. The present disclosure may be implemented as a device or device program (such as a computer program or a computer program product) for executing some or all of the methods described herein. The program of the present disclosure implemented in this manner may be stored in a computer readable medium or may adopt the form of one or more signals. Such signals may be downloaded from internet websites, provided on carrier signals, or in any other form.

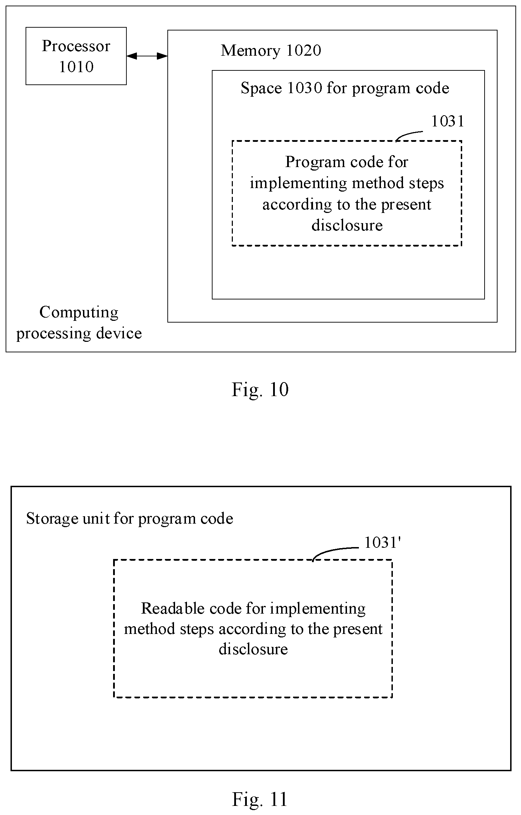

For example, Fig. 10 illustrates a computing processing device that may implement the method according to the present disclosure. This computing processing device traditionally includes a processor 1010 and a computer program product or computer readable medium in the form of a memory 1020. The memory 1020 may be an electronic memory such as a flash memory, an EEPROM (Electrically Erasable Programmable Read Only Memory), an EPROM, a hard disk, or a ROM. The memory 1020 has a storage space 1030 for executing program code 1031 of any method step in the above methods. For example, the storage space 1030 for program code may include each program code 1031 for implementing each step in the above methods. These program codes may be read from or written into one or more computer program products. These computer program products include a program code carrier such as a hard drive, a compact disc (CD), a memory card, or a floppy disk. Such computer program products are usually portable or fixed storage units as described with reference to Fig. 11. The storage unit may have storage segments, storage space, etc., arranged similarly to the memory 1020 in the computing processing device of Fig. 10. The program code may be, for example, compressed in an appropriate form. Typically, the storage unit includes computer readable codes 1031', i.e., codes that may be read by a processor such as 1010. These codes, when being executed on the computing processing device, cause the computing processing device to perform various steps in the methods described above.

The term "an embodiment", "embodiments", or "one or more embodiments" referred to herein means that the specific features, structures, or characteristics described in conjunction with the embodiments are included in at least one embodiment of the present disclosure. Furthermore, it should be noted the example of the term "in an embodiment" may not necessarily refer to the same embodiment.

The specification provides a large number of specific details. However, it may be understood that the embodiments of the present disclosure may be practiced without these specific details. In some examples, well-known methods, structures, and techniques are not shown in detail to avoid blurring the understanding of this specification.

In the claims, any reference symbol between parentheses should not be constructed as a restriction on the claims. The word "including" does not exclude the presence of components or steps not listed in the claims. The word "a" or "an" before a component does not exclude the existence of multiple such components. The present disclosure may be implemented through hardware including several different components and through an appropriately programmed computer. In a unit claim that lists several devices, several of these devices may be specifically implemented through a same hardware item. The use of words first, second, and third does not indicate any order. These words may be interpreted as names.

Finally, it should be noted that the above embodiments are merely used to illustrate the technical solutions of the present disclosure, which are not used to limit it. Although the present disclosure is described in detail with reference to the above embodiments, those ordinarily skilled in the art should understand that they may still modify the technical solutions in the above embodiments or equivalently replace some of the technical features. These modifications or replacements do not separate the essence of the corresponding technical solutions from the spirit and scope of the embodiments of the present disclosure.

## Claims

1. A method for reducing a latency, applied to a terminal, comprising:
receiving downlink control information DCI; and
activating/deactivating configured grant CG and packet data convergence protocol PDCP duplication transmission based on the DCI.

2. The method according to claim 1, wherein the DCI comprises one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

3. The method according to claim 2, wherein in a case that the DCI comprises the first indication information or the second indication information, the activating/deactivating the configured grant CG and the packet data convergence protocol PDCP duplication transmission based on the DCI comprises:
activating or reactivating, based on the DCI, the CG on a carrier corresponding to the carrier ID/carrier group ID indicated by the DCI and performing the PDCP duplication transmission on the carrier corresponding to the carrier ID/carrier group ID.

4. The method according to claim 2, wherein the cell group represents a master cell group MCG or a secondary cell group SCG.

5. The method according to claim 2, wherein in a case that the DCI comprises the third indication information, the activating/deactivating the configured grant CG and the packet data convergence protocol PDCP duplication transmission based on the DCI comprises:
deactivating, based on the DCI, the CG and the PDCP duplication transmission on a carrier corresponding to the carrier ID/carrier group ID indicated by the DCI; or,
deactivating, based on the DCI, the CG and the PDCP duplication transmission on all carriers.

6. The method according to claim 2, further comprising:
receiving a first signaling, wherein the first signaling is used to configure a mapping relationship between the carrier ID indicated by the DCI and a carrier, or the first signaling is used to configure a mapping relationship between the carrier group ID indicated by the DCI and a carrier group.

7. The method according to claim 3, wherein the activating or reactivating the CG on the carrier corresponding to the carrier ID/carrier group ID indicated by the DCI and performing the PDCP duplication transmission on the carrier corresponding to the carrier ID/carrier group ID based on the DCI comprises:
receiving a second signaling, wherein the second signaling is used to configure a data radio bearer for performing activation/deactivation of the PDCP duplication transmission; and
activating or reactivating, based on the DCI and the second signaling, the CG on the carrier corresponding to the carrier ID/carrier group ID indicated by the DCI and performing the PDCP duplication transmission of the data radio bearer on the carrier corresponding to the carrier ID/carrier group ID.

8. The method according to claim 3, wherein the activating or reactivating the CG on the carrier corresponding to the carrier ID/carrier group ID indicated by the DCI and performing the PDCP duplication transmission on the carrier corresponding to the carrier ID/carrier group ID based on the DCI comprises:
activating or reactivating, based on a pre-configured data radio bearer corresponding to the configured grant CG and the DCI, the CG on the carrier corresponding to the carrier ID/carrier group ID indicated by the DCI and performing the PDCP duplication transmission of the data radio bearer on the carrier corresponding to the carrier ID/carrier group ID.

9. The method according to claim 2, wherein a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

10. The method according to claim 1, wherein the DCI is fifth indication information for activating/deactivating the CG.

11. A method for reducing a latency, applied to a network device, comprising:
sending downlink control information DCI to a terminal based on reporting capability of the terminal, to cause the terminal to activate/deactivate configured grant CG and packet data convergence protocol PDCP duplication transmission based on the DCI.

12. The method according to claim 11, wherein the DCI comprises one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

13. The method according to claim 12, wherein the cell group represents a master cell group MCG or a secondary cell group SCG.

14. The method according to claim 12, further comprising:
sending a first signaling to the terminal, wherein the first signaling is used to configure a mapping relationship between the carrier ID indicated by the DCI and a carrier, or the first signaling is used to configure a mapping relationship between the carrier group ID indicated by the DCI and a carrier group.

15. The method according to claim 11, further comprising:
sending a second signaling to the terminal, wherein the second signaling is used to configure a data radio bearer for performing activation/deactivation of the PDCP duplication transmission.

16. The method according to claim 12, wherein a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

17. The method according to claim 11, wherein the DCI is fifth indication information for activating/deactivating the CG.

18. A terminal, comprising a memory, a transceiver, and a processor;
wherein the memory is configured to store a computer program, the transceiver is configured to transmit and receive data under control of the processor, and the processor is configured to read the computer program in the memory and perform following operations:
receiving downlink control information DCI; and
activating/deactivating configured grant CG and packet data convergence protocol PDCP duplication transmission based on the DCI.

19. The terminal according to claim 18, wherein the DCI comprises one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

20. The terminal according to claim 19, wherein in a case that the DCI comprises the first indication information or the second indication information, the activating/deactivating the configured grant CG and the packet data convergence protocol PDCP duplication transmission based on the DCI comprises:
activating or reactivating, based on the DCI, the CG on a carrier corresponding to the carrier ID/carrier group ID indicated by the DCI and performing the PDCP duplication transmission on the carrier corresponding to the carrier ID/carrier group ID.

21. The terminal according to claim 19, wherein the cell group represents a master cell group MCG or a secondary cell group SCG.

22. The terminal according to claim 19, wherein in a case that the DCI comprises the third indication information, the activating/deactivating the configured grant CG and the packet data convergence protocol PDCP duplication transmission based on the DCI comprises:
deactivating, based on the DCI, the CG and the PDCP duplication transmission on a carrier corresponding to the carrier ID/carrier group ID indicated by the DCI; or,
deactivating, based on the DCI, the CG and the PDCP duplication transmission on all carriers.

23. The terminal according to claim 19, wherein the processor is further configured to:
receive a first signaling, wherein the first signaling is used to configure a mapping relationship between the carrier ID indicated by the DCI and a carrier, or the first signaling is used to configure a mapping relationship between the carrier group ID indicated by the DCI and a carrier group.

24. The terminal according to claim 20, wherein the activating or reactivating the CG on the carrier corresponding to the carrier ID/carrier group ID indicated by the DCI and performing the PDCP duplication transmission on the carrier corresponding to the carrier ID/carrier group ID based on the DCI comprises:
receiving a second signaling, wherein the second signaling is used to configure a data radio bearer for performing activation/deactivation of the PDCP duplication transmission; and
activating or reactivating, based on the DCI and the second signaling, the CG on the carrier corresponding to the carrier ID/carrier group ID indicated by the DCI and performing the PDCP duplication transmission of the data radio bearer on the carrier corresponding to the carrier ID/carrier group ID.

25. The terminal according to claim 20, wherein the activating or reactivating the CG on the carrier corresponding to the carrier ID/carrier group ID indicated by the DCI and performing the PDCP duplication transmission on the carrier corresponding to the carrier ID/carrier group ID based on the DCI comprises:
activating or reactivating, based on a pre-configured data radio bearer corresponding to the configured grant CG and the DCI, the CG on the carrier corresponding to the carrier ID/carrier group ID indicated by the DCI and performing the PDCP duplication transmission of the data radio bearer on the carrier corresponding to the carrier ID/carrier group ID.

26. The terminal according to claim 19, wherein a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

27. The terminal according to claim 18, wherein the DCI is fifth indication information for activating/deactivating the CG.

28. A network device, comprising a memory, a transceiver, and a processor;
wherein the memory is configured to store a computer program, the transceiver is configured to transmit and receive data under control of the processor, and the processor is configured to read the computer program in the memory and perform following operation:
sending downlink control information DCI to a terminal based on reporting capability of the terminal, to cause the terminal to activate/deactivate configured grant CG and packet data convergence protocol PDCP duplication transmission based on the DCI.

29. The network device according to claim 28, wherein the DCI comprises one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

30. The network device according to claim 29, wherein the cell group represents a master cell group MCG or a secondary cell group SCG.

31. The network device according to claim 29, wherein the processor is further configured to:
send a first signaling to the terminal, wherein the first signaling is used to configure a mapping relationship between the carrier ID indicated by the DCI and a carrier, or the first signaling is used to configure a mapping relationship between the carrier group ID indicated by the DCI and a carrier group.

32. The network device according to claim 28, wherein the processor is further configured to:
send a second signaling to the terminal, wherein the second signaling is used to configure a data radio bearer for performing activation/deactivation of the PDCP duplication transmission.

33. The network device according to claim 29, wherein a carrier used by the terminal to receive the DCI is a main carrier for performing activation/deactivation of the PDCP duplication transmission;
a carrier corresponding to the carrier ID indicated by the DCI is a secondary carrier for performing activation/deactivation of the PDCP duplication transmission, or a carrier corresponding to the carrier group ID indicated by the DCI is a secondary carrier for performing activation/deactivation of the PDCP duplication transmission.

34. The network device according to claim 28, wherein the DCI is fifth indication information for activating/deactivating the CG.

35. An apparatus for reducing a latency, applied to a terminal, comprising:
a first receiving module, configured to receive downlink control information DCI; and
a first processing module, configured to activate/deactivate configured grant CG and packet data convergence protocol PDCP duplication transmission based on the DCI.

36. The method according to claim 35, wherein the DCI comprises one of the following:
first indication information for indicating carrier ID/carrier group ID for which PDCP duplication transmission is to be activated;
second indication information for indicating carrier ID within a cell group for which activation is to be performed;
third indication information for indicating carrier ID/carrier group ID for which PDCP duplication transmission is to be deactivated; or,
fourth indication information for indicating activation/deactivation of PDCP duplication transmission of a data radio bearer DRBm.

37. The method according to claim 36, wherein in a case that the DCI comprises the first indication information or the second indication information, the first processing module comprises:
a first processing unit, configured to activate or reactivate, based on the DCI, the CG on a carrier corresponding to the carrier ID/carrier group ID indicated by the DCI and perform the PDCP duplication transmission on the carrier corresponding to the carrier ID/carrier group ID.

38. The method according to claim 36, wherein in a case that the DCI comprises the third indication information, the first processing module comprises:
a second processing unit, configured to deactivate, based on the DCI, the CG and the PDCP duplication transmission on a carrier corresponding to the carrier ID/carrier group ID indicated by the DCI; or,
a third processing unit, configured to deactivate, based on the DCI, the CG and the PDCP duplication transmission on all carriers.

39. An apparatus for reducing a latency, applied to a network device, comprising:
a first sending module, configured to send downlink control information DCI to a terminal based on reporting capability of the terminal, to cause the terminal to activate/deactivate configured grant CG and packet data convergence protocol PDCP duplication transmission based on the DCI.

40. A processor readable storage medium, wherein the processor readable storage medium stores a computer program used to cause the processor to execute the method for reducing the latency according to any one of claims 1 to 10, or the method for reducing the latency according to any one of claims 11 to 17.

41. A computer program, comprising computer readable code, wherein the computer readable code, when being executed in a computing processing device, causes the computing processing device to execute the method for reducing the latency according to any one of claims 1 to 10 or 11 to 17.
